Europäisches Patentamt

European Patent Office

Office européen des brevets

(11) Veröffentlichungsnummer: **0 355 541**
**A2**

(19)

## (12) EUROPÄISCHE PATENTANMELDUNG

(21) Anmeldenummer: 89114518.7

(22) Anmeldetag: 05.08.89

(51) Int. Cl.⁴: **C08G 75/02**

(30) Priorität: 18.08.88 DE 3828058

(43) Veröffentlichungstag der Anmeldung:
28.02.90 Patentblatt 90/09

(84) Benannte Vertragsstaaten:
**BE DE FR GB IT**

(71) Anmelder: **BAYER AG**

**D-5090 Leverkusen 1 Bayerwerk(DE)**

(72) Erfinder: **Köhler, Burkhard, Dr.**
**Virneburgstrasse 9**
**D-4150 Krefeld 11(DE)**
Erfinder: **Heinz, Hans-Detlef, Dr.**
**Breslauer Strasse 31**
**D-4150 Krefeld 11(DE)**

(54) **Hochmolekulare Polyarylensulfide, hergestellt aus Polyarylensulfiden und Dihalogenverbindungen.**

(57) Die Erfindung betrifft hochmolekulare Polyarylensulfide (PAS), vorzugsweise Polyphenylensulfide (PPS), hergestellt aus Polyarylensulfiden, vorzugsweise Polyphenylensulfid und Dihalogen verbindungen.

EP 0 355 541 A2

## Hochmolekulare Polyarylensulfide, hergestellt aus Polyarylensulfiden und Dihalogen verbindungen

Die Erfindung betrifft hochmolekulare Polyarylensulfide (PAS), vorzugsweise Polyphenylensulfide (PPS), hergestellt aus Polyarylensulfiden, vorzugsweise Polyphenylensulfid und Dihalogen verbindungen.

Polyarylensulfide bekannte (z.B. US-PS 3354129, EP-OS 171021). Sie sind inerte, hochtemperaturbeständige Thermoplaste, die zudem einen hohen Füllgrad mit Glasfasern und/oder anderen organischen Füllstoffen erlauben. Der Einsatz dieser Polymeren, insbesondere des Polyparaphenylensulfids (PPS), nimmt vor allem in Bereichen zu, die bislang Duroplasten vorbehalten werden.

Ein Nachteil von PAS kann eine unbefriedigende Zähigkeit sein, die bei steigender Schmelzviskosität zunehmen kann. Für manche Anwendungen kann auch eine schnelle Kristallisation des PAS von Nachteil sein, z.B. bei der Herstellung von Folien. Auch die Neigung zur schnellen Kristallisation ist bei PAS-Typen mit hoher Schmelzviskosität geringer.

Es wurde nun gefunden, daß ausgewählte Dihalogenverbindungen sehr gut geeignet sind, bei Einarbeitung in die PAS-Schmelze, vorzugsweise PPS-Schmelze, eine leicht kontrollierbare Erhöhung der Schmelzviskosität und ein gutes Kristallisationsverhalten der Polymeren zu bewirken.

Gegenstand der Erfindung sind daher hochmolekulare Polyarylensulfide, vorzugsweise Polyphenylensulfide, hergestellt durch Reaktion von bekannten Polyarylensulfiden, vorzugsweise Polyphenylensulfid, mit Dihalogenverbindungen der Formel (I)

Hal-R-Hal      (I),

in welcher

R für $C_{6-22}$-Alkylen, bevorzugt ein Hexamethylen, $C_{6-22}$-Cycloalkylen, $C_{6-22}$-Bis-(halogenmethyl)-arylen bedeutet, wobei der Arylenrest bevorzugt ein m-oder p-Phenylenrest oder ein 1,4-, 1,5-, 1,6-, 1,7-, 1,8-, 2,6- oder 2,7-Naphthylenrest sein kann und die Arylenreste gegebenenfalls $C_{1-6}$-Alkyl-, bevorzugt Methyl-, Halogen- (z.B. Cl-, Br-)methyl-, $C_{6-22}$-Aryl, bevorzugt Phenyl- oder Halogen- (z.B. Cl-, Br-)substituenten tragen und

Hal für Fluor, Chlor, Brom oder Jod, bevorzugt Chlor, steht.

Beispiele für Dihalogenverbindungen sind aromatische und aliphatische Dihalogenverbindungen der Formel (I), z.B. p-Xylylendichlorid, m-Xylylendichlorid, 2,4-(Dichlormethyl)-1,5-dimethylbenzol, 1,6-Dichlorhexan, 1,12-Dichlordodecan, 1,2,3-, und 1,2,4- und 1,3,5-Tri-(chlor methyl)benzol, 1,6- und 2,6-Di(chlormethyl)naphthalin und die entsprechende Bromverbindungen. Sie können einzeln oder als Mischung eingesetzt werden.

Erfindungsgemäß werden die Polyarylensulfide, vorzugsweise Polyphenylensulfide, durch Zusammenschmelzen einer Mischung aus Polyarylensulfid mit 3 bis 30 Gew.-%, bevorzugt 5 bis 20 Gew.-% Dihalogenverbindung der Formel I beispielsweise in (Schneckenwellen)Extrudern, Knetern usw. hergestellt.

Eine Nachbehandlungszeit in der Schmelze beträgt 0,5 bis 500 min, bevorzugt 5 bis 60 min.

Die geeignete Temperatur zur erfindungsgemäßen Nachbehandlung in der Schmelze beträgt 280°C bis 450°C, bevorzugt 300°C bis 360°C.

In einer besonderen Ausführungsform können auch in fester Phase Formkörper aus den erfindungsgemäß · einzusetzenden Polyarylensulfiden bei Temperaturen von 150°C bis 270°C mit Dihalogenverbindungen der Formel (I) nachbehandelt werden.

Das erfindungsgemäße Verfahren kann unter Inertgasen (z.B. Stickstoff, Argon), gegebenenfalls im Vakuum bis $10^{-6}$ bar durchgeführt werden. Bevorzugt wird eine Durchführung unter Inertgas.

Die erfindungsgemäß hergestellten Polyarylensulfide können nach dem Verfahren des Spritzgusses oder der Extrusion zu Formkörpern, Fasern oder Folien verarbeitet werden.

### Beispiel 1

Man versetzt 10 g Paraphenylensulfid der Schmelzviskosität 44 Pas (jeweils 306°C, 1000 $s^{-1}$) mit 1 g 2,4-(Dichlormethyl)-1,5-dimethylbenzol und erhitzt 1 h auf 310°C. Die Schmelzviskosität des resultierenden Polyarylensulfids beträgt 22000 Pas.

### Beispiel 2

Man versetzt mit 0,7 g 2,4-(Dichlormethyl)-1,5-dimethylbenzol und erhitzt 30 min auf 310°C. Die Schmelzviskosität des resultierenden Polyarylensulfids beträgt 470 Pas.

### Beispiel 3

Man versetzt mit 0,5 g 2,4-(Dichlormethyl)-1,5-dimethylbenzol und erhitzt 10 min auf 310°C. Die Schmelzviskosität des resultierenden Polyarylensulfids beträgt 68 Pas.

### Beispiel 4

Man versetzt mit 0,7 g 1,6-Dichlorhexan und erhitzt 30 min auf 310°C. Die Schmelzviskosität des resultierenden Polyarylensulfids beträgt 200 Pas.

**Ansprüche**

1. Hochmolekulare Polyarylensulfide, vorzugsweise Polyphenylensulfide, hergestellt durch Reaktion von bekannten Polyarylensulfiden mit Dihalogenverbindungen der Formel (I)

Hal-R-Hal    (I),

in welcher

R für $C_{6-22}$-Alkylen, $C_{6-22}$-Cycloalkylen, oder Bis-(halogenmethyl)-arylen bedeutet, wobei der Arylenrest ein m- oder p-Phenylenrest, ein 1,4-, 1,5-, 1,6-, 1,7-, 1,8-, 2,6- oder 2,7-Naphthylenrest sein kann und die Arylenrest gegebenenfalls $C_{1-6}$-Alkyl-, Halogenmethyl-, $C_{6-22}$-Aryl-, oder Halogensubstituenten tragen und

Hal für Fluor, Chlor, Brom oder Jod, steht.

2. Verfahren zur Herstellung von Polyarylensulfiden nach Anspruch 1, dadurch gekennzeichnet, daß Polyarylensulfide mit Dihalogenverbindungen oder Formel (I)

Hal-R-Hal    (I),

in welcher

R und Hal die in Anspruch 1 angegebene Bedeutung haben,

zusammengeschmolzen werden.

3. Verfahren nach Anspruch 2, dadurch gekennzeichnet, daß die Polyarylensulfide als geformte Körper eingesetzt werden.

4. Verwendung von Polyarylensulfiden nach Anspruch 1 zur Herstellung von geformten Körpern.